# EUROPEAN PATENT APPLICATION

(11) **EP 4 647 832 A1**
(43) Date of publication of application: **12.11.2025**
(21) Application number: 24174456.4
(22) Date of filing: 07.05.2024
(51) Int. Cl.: G02F 1/01, G02F 1/21, G02F 1/225

(54) **PHOTONIC INTEGRATED CIRCUIT**

(71) Applicant: Imec VZW, 3001 Leuven (BE)
(72) Inventor: SHARIF AZADEH, Mohammad Saeed, 3001 Leuven (BE); FIGEYS, Bruno, 3001 Heverlee (BE)
(74) Representative: Winger

(57) **Abstract**

A photonic integrated circuit (1, 2, 3) comprising a waveguide (100, 200, 300) for guiding an electro-magnetic wave (110, 210, 310), and a thermomechanical compensator comprising a thermomechanical actuator (120, 220, 320) for interacting with the electro-magnetic wave (110, 210, 310), when present in the waveguide (100, 200, 300), for affecting an effective refractive index experienced by said electro-magnetic wave (110, 210, 310). The thermomechanical compensator is arranged so that a position of the actuator (120, 220, 320) with respect to said waveguide (100, 200, 300) depends on an ambient temperature so as to reduce or minimize an aggregate phase shift of said electro-magnetic wave (110, 210, 310) within at least part of the photonic integrated circuit (1, 2, 3) resulting from a change of said ambient temperature.

## Description

### Technical field of the invention

The present invention relates to the field of photonic integrated circuits. In particular, the present invention relates to thermal compensators for photonic integrated circuits.

### Background of the invention

In the realm of photonic integrated circuits (PICs), the quest for high-performance, reliable, and efficient devices is a continuous journey. These circuits, which integrate optical components on a single chip, have revolutionized various fields such as telecommunications, computing, and sensing by offering compact, high-speed solutions. However, a significant challenge that persists in the development and operation of PICs is their inherent sensitivity to ambient temperature fluctuations. The core issue stems from the thermo-optic (TO) effect, where the refractive index of the materials used in PICs changes with temperature. This change in refractive index directly impacts the performance of the device, as it can lead to undesirable phase shifts in the guided optical modes.

Silicon, a widely used material in the fabrication of PICs due to its excellent optical and electronic properties, exhibits a particularly high TO coefficient. This makes silicon-based PICs especially prone to temperature-induced performance variations. The challenge is even more pronounced in devices relying on precise optical resonance conditions, such as ring resonators, where minor temperature changes can lead to significant deviations from the desired operating conditions. The current approach to mitigate this issue involves the integration of active temperature control systems, which typically consist of on-chip heaters controlled by external electronics with input from temperature sensors or optical sensors . While this method can stabilize the device temperature, it comes at the cost of increased power consumption and complexity, which is particularly problematic for applications requiring low power operation or a large number of integrated devices. Moreover, the reliance on active temperature control systems introduces additional design constraints and can limit the scalability and integration density of PICs.

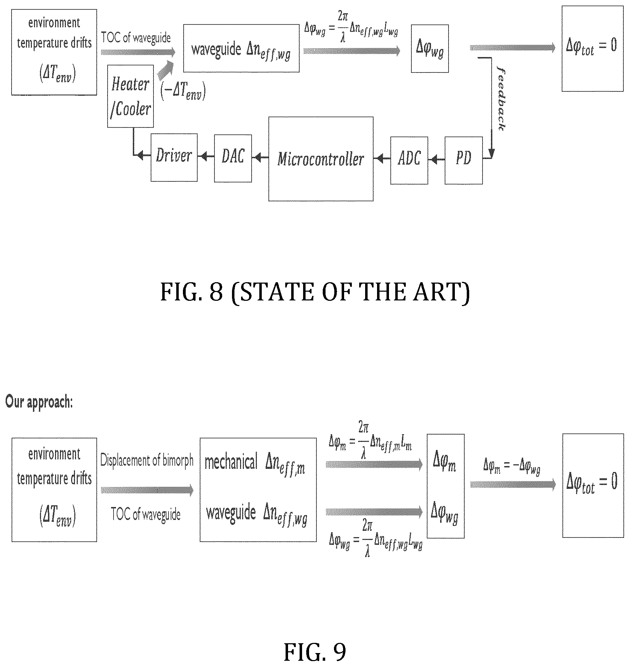

An exemplary scheme for compensating for a temperature induced phase shift using a heater or cooler according to the state-of-the-art is shown in FIG. 8. As the ambient temperature rises or falls (ΔTₑₙᵥ), the refractive index of the waveguide core (Δn_{eff,wg}) also varies correspondingly, increasing or decreasing (for example, for silicon Δn_{eff,Si} = 1.5×10⁻⁴ ΔT). This change in refractive index provokes an associated phase shift in the guided optical mode of Δφ_{wg}=2π Δn_{eff,wg} L_{wg}/λ (with L_{wg} the length of the waveguide and λ the wavelength of the electro-magnetic wave). The undesired phase shift Δφ_{wg} perturbs the biasing point of the device and thus should be eliminated. In the state-of-the-art, the ambient temperature may be compensated for, using a feedback technique implemented using an additional circuit, so that the average temperature of the device is stabilized and the effective phase shift Δφₜₒₜ remains small and preferably zero. However, this requires constant detection of the temperature of the photonic integrated circuit and heating or cooling of the photonic integrated circuit, both of which consume a large amount of electrical power.

An alternative method in the prior art to passively compensate for the ambient temperature drift, is to physically cover the PIC devices with a material, e.g., a special polymer, with a negative TO coefficient, so as to compensate the positive TO coefficient of the silicon. The big advantage of this method over using an active control system is that it does not consume any electrical power. However, it comes with the main disadvantage of increasing the optical loss, as well as introducing a great limitation on the PIC design, and the functional bandwidth.

Still an alternative technique in the prior art makes use of devices that use a moveable part with respect to a waveguide to influence the effective refractive index experienced by an electro-magnetic wave in the waveguide. These devices essentially require application of an external voltage control, which again introduces problems such as large power consumption, large footprint, and a constant feedback by temperature or optical sensors.

As the demand for more compact, energy-efficient, and high-performance photonic devices continues to grow, the limitations of current temperature stabilization techniques or known compensators become increasingly apparent. This highlights the need for innovative approaches to address the temperature sensitivity of PICs, enabling the development of more robust and efficient photonic technologies.

Despite the advancements in materials science and device engineering, the fundamental challenge of temperature sensitivity in PICs remains a critical hurdle. There is, therefore, still a need for further advancements in the field to address these challenges, paving the way for the next generation of photonic integrated circuits that can operate reliably across a wider range of environmental conditions.

There is thus still a need in the art for devices and methods that address at least some of the above problems.

### Summary of the invention

It is an object of embodiments of the present invention to provide for passive compensation of an induced phase shift in a waveguide as a result of a change in the ambient temperature.

This objective is accomplished by a photonic integrated circuit and a method according to the invention.

It is an advantage of embodiments of the present invention that, as the compensation is passive, active control can be prevented, strongly facilitating the compensation mechanism compared to state-of-the-art active compensators and limiting the power consumption of the circuit. It is an advantage of embodiments of the present invention that a photonic integrated circuit can maintain its performance across a range of ambient temperatures without the need for active temperature control systems or for circuits for applying control voltages, thereby reducing power consumption and operational costs. It is a further advantage of embodiments of the present invention that the compensation method induces no additional optical losses, nor is an alternative design of other components of the photonic integrated circuit required.

In a first aspect, the present invention relates to a photonic integrated circuit comprising a waveguide for guiding an electro-magnetic wave. The photonic integrated circuit further comprises a thermomechanical compensator comprising a thermomechanical actuator for interacting with the electro-magnetic wave, when present in the waveguide, for affecting an effective refractive index experienced by said electro-magnetic wave, arranged so that a position of the actuator with respect to said waveguide depends on an ambient temperature so as to reduce or minimize an aggregate phase shift of said electro-magnetic wave within at least part of the photonic integrated circuit resulting from a change of said ambient temperature.

The effective refractive index experienced by the wave, is based on the refractive index of (the material of) the waveguide, and the interaction of an evanescent part of the wave in the waveguide with the actuator. A different position of the actuator with respect to said waveguide may result in a different interaction of the evanescent part of the wave in the waveguide with the actuator (e.g., a different amount of light coupling between the waveguide and the actuator), and thus in a different effective refractive index experienced by the wave. The effective refractive index experienced by the wave may thus be adapted by adapting the position of the actuator.

The thermomechanical actuator typically is a passive element that converts a temperature change into motion. Typically, in contrast with state-of-the-art compensators that require active control, the present invention requires no control circuit, and, typically, no control voltage or current needs to be applied to activate or move the thermomechanical actuator. Instead, the thermomechanical actuator may actuate directly as a result of the ambient temperature change. Therefore, the thermomechanical compensator of embodiments of the present invention may simplify implementation compared to state-of-the-art compensators, as the number of required external control devices may be reduced to zero. Furthermore, the power budget required by the photonic integrated circuit of the present invention may be particularly low.

When the ambient temperature changes (e.g., due to heating within the system during operation, or due to environmental temperature changes), a refractive index of the waveguide and other components within the photonic integrated circuit with which the electro-magnetic wave interacts, e.g., through which the wave propagates or on which it reflects or by which it is refracted, may change, which may, in absence of the compensator, induce a phase shift of the electro-magnetic wave in the integrated circuit. In the present invention, the same ambient temperature change simultaneously adapts the position of the thermomechanical actuator of the compensator with respect to the waveguide, to change the effective refractive index experienced by the electromagnetic wave in the waveguide so as to compensate for this phase shift within said at least part of the photonic integrated circuit. Thereby, the aggregate phase shift due to said change in ambient temperature may be reduced or minimized by the compensator (typically compared to when the compensator would not be present or would not be actuated), and is preferably substantially zero. Said aggregate phase shift is at least reduced or minimized in a predetermined temperature range.

The present invention may be applied in a PIC-based Lidar as well as sensors, where a thermally stable performance is strongly preferred. Furthermore, the present invention may be implemented to thermally stabilize a large array of photonic switches, for instance in photonic AI accelerators. In these photonic circuits, the sheer number of required devices makes the use of an active control system as used in the state-of-the-art practically unfeasible.

In embodiments of the present invention, the photonic integrated circuit may comprise a thermomechanical compensator for minimizing the aggregate phase shift in the, e.g., whole, photonic integrated circuit, or in part of the photonic integrated circuit. For example, it may be preferred to compensate for any phase shift in only part of the integrated circuit, e.g., within a ring resonator but not in other components of the photonic integrated circuit. In embodiments of the present invention, the photonic integrated circuit may comprise a plurality of thermomechanical compensators, wherein each thermomechanical compensator may minimize the aggregate phase shift in part of the photonic integrated circuit, or wherein the effect of multiple thermomechanical compensators may be accumulated for, together, compensating for a large phase shift resulting from a large ambient temperature change.

In embodiments, the thermomechanical actuator comprises a thermally activated bimorph or multimorph comprising at least two layers formed of different materials having different thermal expansion coefficients. Bimorphs or multimorphs may exhibit efficient and reproducible actuation resulting from temperature changes, making them reliable and effective. In embodiments, a first of the at least two layers may be formed of silicon and a second of the at least two layers may be formed of aluminium. In other embodiments, a first of the at least two layers may be formed of silicon dioxide and a second of the at least two layers may be formed of aluminium. Although any type of material may be used, as long as the materials of the different layers have a different thermal expansion coefficient (e.g., at least in said predetermined temperature range), these embodiments are particularly suitable for photonic integrated circuit applications, and result in effective actuation.

In embodiments, the actuator comprises a suspended structure, wherein the suspended structure is adapted for moving (e.g., changing shape, such as by bending), by a temperature change, i.e., by said change of said ambient temperature, with respect to said waveguide. As the structure is suspended, movement with respect to the waveguide may be facilitated. In embodiments, the suspended structure comprises a singly clamped cantilever. This configuration is particularly well-suited for electromagnetic waves that are in the near-infrared spectrum. In embodiments, the suspended structure comprises a membrane suspended over the waveguide. The membrane may be clamped at all sides, i.e., all around. This configuration is particularly well-suited for electro-magnetic waves that are in the visible spectrum. In embodiments, the suspended structure comprises a double-side clamped beam (e.g., clamped at two opposite sides or at two opposite ends of the beam). This configuration is particularly well-suited for electro-magnetic waves that are in the visible spectrum. Each of these embodiments may in principle be used for any wavelength range; however, depending on the type of material, different types of suspended structures may more easily be fabricated (indicated by what spectrum the configuration is particularly well-suited for). For example, a suspended bimorph comprising a silicon and an aluminum layer may be made rather easily. However, when the bimorph would contain a layer of silicon dioxide and a layer of aluminum, fabrication may be more difficult. The difficulty of fabrication may depend on material mechanical properties, as well as easiness of fabrication (e.g., undercut etch selectivity). Therefore, for each platform (e.g., silicon that is suitable for infrared electro-magnetic waves or silicon dioxide that is suitable for visible electro-magnetic waves), a slightly different type of suspended structure may be most suitable, practical, or fabricable.

In embodiments, the dependence of said position of the actuator with respect to said waveguide on said ambient temperature means that a size of a gap separating the thermomechanical actuator from the waveguide depends on said ambient temperature. The size of the gap strongly affects the interaction of the actuator with the wave in the waveguide and, thus, the effective refractive index experienced by the wave.

In embodiments, the waveguide comprises a ring resonator, or a Mach-Zehnder interferometer, or a photonic crystal, or a phase shifter, or an amplitude modulator, or a filter, or an arrayed waveguide grating.

In embodiments, the waveguide is formed of silicon, silicon nitride, or indium phosphide. In integrated photonics, waveguides are typically formed of one of these materials. The thermo-optic coefficient of silicon is particularly large, while that of silicon nitride is particularly small.

The thermomechanical compensator is adapted for minimizing the aggregate phase shift, i.e., the total phase shift for the electro-magnetic wave, including the (unwanted) phase shift due to the temperature change induced change in refractive index of the waveguide and possibly other components of the photonic integrated circuit, and the phase shift induced by the thermomechanical compensator. In embodiments, the aggregate phase shift being minimized means that the aggregate phase shift is smaller, e.g., at least 20% or at least 50% or at least 70% or at least 90% smaller, than said unwanted phase shift. Preferably, the compensator is adapted so that said aggregate phase shift is at most 0.2π, more preferably at most 0.1π, even more preferably at most 0.05π over the entire temperature range at which the device is used. Preferably, said aggregate phase shift is achieved over a predetermined temperature range having a width (i.e., the difference between the highest temperature and the lowest temperature within the range) of at least 5°C, more preferably having a width of at least 10 °C, even more preferably having a width of at least 20 °C, yet more preferably having a width of at least 40°C or at lest 80°C. The inventors have simulated, for embodiments falling within the scope of the present invention, aggregate phase shifts of less than 0.1π over an ambient temperature change of over 80°C, indicating what may be achieved with the passive circuit of the present invention. Preferably, said aggregate phase shift is achieved at least within a predetermined temperature range of from 20°C to 40°C, more preferably of from 20°C to 80°C. The aggregate phase shift is at least minimized for the wavelength of the electro-magnetic wave, which may be, e.g., 850nm, 1310nm, or 1550nm, although the invention is not limited to any particular wavelength, since the opto-mechanical mechanism is wavelength agnostic, and can be implemented for any desired part of optical spectrum.

The aggregate phase shift in the photonic integrated circuit may be that determined by a simulation on the photonic integrated circuit, which may be performed using common software. Similarly, the phase shift due to the temperature change and due to the thermomechanical compensator (e.g., by determining a difference between a simulation in absence and presence of the compensator) may be determined from such simulations as well. (As one example, Lumerical may be used to determine an effect of displacement on the phase-shift, according to the sensitivity of the refractive index of the materials used in the waveguide, and the total length of the compensator; and COMSOL Multiphysics using a finite element method may be used to create a parametrized geometry, to determine the real displacement in the device - although other software and methods typically give corresponding results.) Alternatively, the phase shift due to the temperature change and due to the thermomechanical compensator, and the aggregate phase shift, may be derived by measurements or experiments on an actual photonic integrated circuit, e.g., from an output of the photonic integrated circuit. The exact method may depend on the type of photonic integrated circuit considered. However, how to determine the phase shift is considered obvious to the skilled person, as the underlying physics are well-known to the skilled person.

In a second aspect, the present invention relates to a method of reducing or minimizing an aggregate phase shift of said electro-magnetic wave within at least part of a photonic integrated circuit resulting from a change of an ambient temperature. A reduction is obtained compared to the situation where no compensation is present. The method comprises providing an electro-magnetic wave in a waveguide of the photonic integrated circuit. The method further comprises providing a thermomechanical compensator comprising a thermomechanical actuator for interacting with the electromagnetic wave for affecting an effective refractive index experienced by said electromagnetic wave, wherein the actuator is actuated by said ambient temperature change so that a position of the actuator with respect to said waveguide changes so as to reduce or minimize said aggregate phase shift.

The photonic integrated circuit may be in accordance with embodiments of the first aspect of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1A and 1B are a schematic representation of a top view and a cross-sectional view, respectively, of a first example of a photonic integrated circuit comprising a thermomechanical compensator in accordance with embodiments of the present invention.
FIG. 2 is a schematic representation of a cross-sectional view of the first example of a photonic integrated circuit comprising a thermomechanical compensator in accordance with embodiments of the present invention, after a temperature change with respect to FIG 1B.
FIG. 3A and 3B are a schematic representation of a top view and a cross-sectional view, respectively, of a second example of a photonic integrated circuit comprising a thermomechanical compensator in accordance with embodiments of the present invention.
FIG. 4A and 4B are a schematic representation of a top view and a cross-sectional view, respectively, of a third example of a photonic integrated circuit comprising a thermomechanical compensator in accordance with embodiments of the present invention.
FIG. 5 is a plot of a phase shift (without compensator) due to the temperature dependent refractive index of a ring resonator, as a function of temperature with the phase at 20 °C as a reference for an electro-magnetic wave in the ring resonator of the third example of a photonic integrated circuit.
FIG. 6 is a plot of the normalized transmitted power Iwithout compensator) of an electro-magnetic wave in the ring resonator of the third example of a photonic integrated circuit.
FIG. 7 is a plot of a phase shift induced by the thermomechanical compensator and of an aggregate phase shift, as a function of temperature with the phase at 20 °C as a reference, for an electro-magnetic wave in the ring resonator of the third example of a photonic integrated circuit.
FIG. 8 is a scheme for compensating for a temperature change induced phase shift using a technique according to the state-of-the-art.
FIG. 9 is a scheme for compensating for a temperature change induced phase shift using a technique according to embodiments of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "thermomechanical compensator" refers to a device or component that utilizes the principles of thermomechanical actuation to compensate for or counteract the effects of temperature changes on the photonic integrated circuit. As used herein, and unless otherwise specified, the term "thermomechanical actuator" refers to a device or component that converts thermal energy into mechanical motion or displacement.

As used herein, and unless otherwise specified, the term "effective refractive index" refers to the apparent or perceived refractive index experienced by an electromagnetic wave propagating through a medium or structure, taking into account the combined effects of the material properties and the geometry of the medium or structure. The effective refractive index can be influenced by factors such as the proximity of the thermomechanical actuator to the waveguide, the size of the gap between the actuator and the waveguide, and the interaction between the electromagnetic wave and the actuator.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a photonic integrated circuit comprising a waveguide for guiding an electro-magnetic wave. The photonic integrated circuit further comprises a thermomechanical compensator comprising a thermomechanical actuator for interacting with the electro-magnetic wave, when present in the waveguide, for affecting an effective refractive index experienced by said electro-magnetic wave, arranged so that a position of the actuator with respect to said waveguide depends on an ambient temperature so as to reduce or minimize an aggregate phase shift of said electro-magnetic wave within at least part of the photonic integrated circuit resulting from a change of said ambient temperature.

In a second aspect, the present invention relates to a method of reducing or minimizing an aggregate phase shift of said electro-magnetic wave within at least part of a photonic integrated circuit resulting from a change of an ambient temperature. The method comprises providing an electro-magnetic wave in a waveguide of the photonic integrated circuit. The method further comprises providing a thermomechanical compensator comprising a thermomechanical actuator for interacting with the electromagnetic wave for affecting an effective refractive index experienced by said electromagnetic wave, wherein the actuator is actuated by said ambient temperature change so that a position of the actuator with respect to said waveguide changes so as to reduce or minimize said aggregate phase shift.

Reference is made to FIG. 9, which is a scheme outlining the functioning of embodiments of the present invention.

An undesired phase shift (Δφ_{wg}) is due to a change in ambient temperature (ΔTₑₙᵥ) resulting in a change in the refractive index (Δn_{eff,wg}) of the waveguide or optional other components of the photonic integrated circuit. Said undesired phase shift may be formulated as Δφ_{wg} = 2π Δn_{eff,wg} L_{wg} / λ (with L_{wg} the length of the waveguide and λ the wavelength of the electro-magnetic wave). Embodiments of the present invention provide to mechanically generate an opposite phase shift (Δφₘ), preferably having an opposite sign and equal magnitude as the undesired phase shift, by positioning or repositioning, by said change in the ambient temperature (ΔTₑₙᵥ), the thermomechanical actuator with respect to the waveguide so that it induces a change in refractive index (Δn_{eff,m}) experienced by the electro-magnetic wave in the waveguide. Said induced phase shift (Δφₘ) may be given by Δφₘ=2π Δn_{eff,wg} Lₘ/λ (with Lₘ the length of the waveguide along which the effective refractive index experienced by the electromagnetic wave in the waveguide is adapted by the thermomechanical compensator). Thereby, the aggregate phase shift (Δφₜₒₜ = Δφₘ + Δφ_{wg}) is reduced or minimized and preferably (substantially) zero. This opposite phase shift is generated automatically, according to the ambient temperature, without requiring an external controller or consuming any power.

Specific examples of thermomechanical compensators in accordance with embodiments of the present invention are elaborated below.

### Example 1: Thermomechanical compensator comprising a singly clamped cantilever

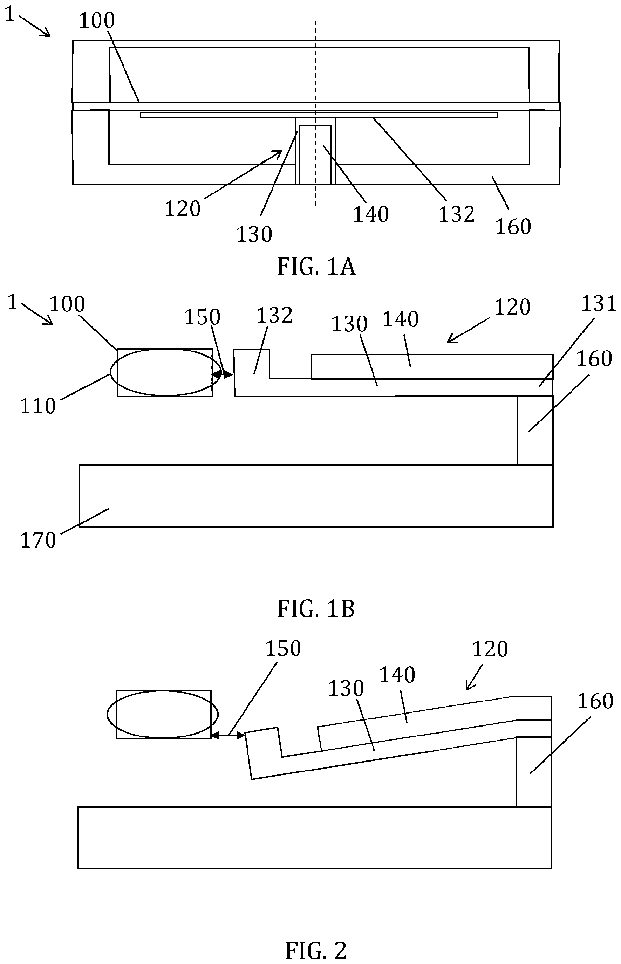

Reference is made to FIG. 1A and 1B, showing, respectively, a top view and a cross-sectional view (along the dashed line in the top view of FIG. 1A), of a part of a photonic integrated circuit (1) in accordance with embodiments of the present invention, adapted for near-infrared applications. The photonic integrated circuit (1) comprises a waveguide (100), that is in the example illustrated suspended over a silicon substrate (170), for guiding an electro-magnetic wave (110), and a thermomechanical compensator comprising a thermomechanical actuator (120) for interacting with the electro-magnetic wave (110). The thermomechanical actuator (120) is, in the present example, a singly clamped cantilever comprising a bimorph with a silicon layer (130) and an aluminium layer (140). In the example illustrated, the mechanical compensator is a double layer bimorph, which may interact with light with evanescent coupling, coupling with an evanescent part of the electro-magnetic wave (110). In the example illustrated, the singly clamped cantilever is suspended, wherein a first, clamped end (131) of the thermomechanical actuator (120) rests on a silicon oxide ridge (160), and wherein a second, suspended end or cantilever tip (132) of the thermomechanical actuator (120) is located proximate the waveguide (100) for said interacting with the evanescent part of the electro-magnetic wave (110).

A gap (150) is present between the cantilever tip (132) and the waveguide (100). In the top view of FIG. 1A, it may be observed that the cantilever tip (132) extends along a large portion of the of the waveguide (100). Thereby, the interaction between the thermomechanical actuator (120) or the cantilever tip (132) on one hand, and the electro-magnetic wave (110) in the waveguide (100) on another hand, may be particularly strong, so that the specific location of the thermomechanical actuator (120) or the cantilever tip (132) with respect to the waveguide (100), or the size of the gap (150), may have a large effect on the effective refractive index experienced by the electro-magnetic wave (110).

In response to a change of ambient temperature, the refractive index of components of the photonic integrated circuit (1) may change, e.g., the refractive index of the waveguide (100) and/or of components elsewhere in the photonic integrated circuit (1), such as in part of the photonic integrated circuit (1) not shown in FIG. 1A and 1B. Thereby, in absence of the thermomechanical compensator, an undesired temperature induced phase shift may occur for the electro-magnetic wave (110) within at least part of the photonic integrated circuit (1). The thermomechanical compensator serves to compensate for this undesired phase shift.

Reference is made to FIG. 2. As the ambient temperature changes, the bimorph cantilever of the thermomechanical actuator (120) bends either upward or downward due to the different thermal expansion coefficients of silicon (130) and aluminium (140), thus changing the position of the thermomechanical actuator (120) or the cantilever tip (132) with respect to the waveguide (100), e.g., the size of the gap (150), thus affecting the effective refractive index experienced by the electro-magnetic wave (110) in the waveguide (100). In particular, by an increase of temperature, both the aluminium (140) and silicon (130) expand, but since the expansion coefficient of the aluminium (140) is larger than that of silicon (130), the cantilever (120) bends down.

Said change in position of the thermomechanical actuator (120) induces a phase shift, having an opposite sign as the undesired phase shift, the induced phase shift preferably having a magnitude that is preferably of a similar or the same size as the undesired phase shift. Thereby, the undesired phase shift may be compensated for, so that the aggregate phase shift in at least part of the photonic integrated circuit (1) may be reduced or minimized. Simulations can be performed to determine the required dimensions and properties of the thermomechanical actuator or to design the thermomechanical actuator to realize such compensating phase shift.

Thus, the repositioning of the thermomechanical actuator (120), in reaction to the changing ambient temperature, can compensate for the undesired phase shift resulting from the same ambient temperature change, rendering the photonic device effectively temperature insensitive or less temperature sensitive. This at least partially compensates for the thermally induced phase shift in the waveguide (100), reducing or minimizing the aggregate phase shift within at least part of the photonic integrated circuit (1).

### Example 2: Thermomechanical compensator comprising a double-clamped beam

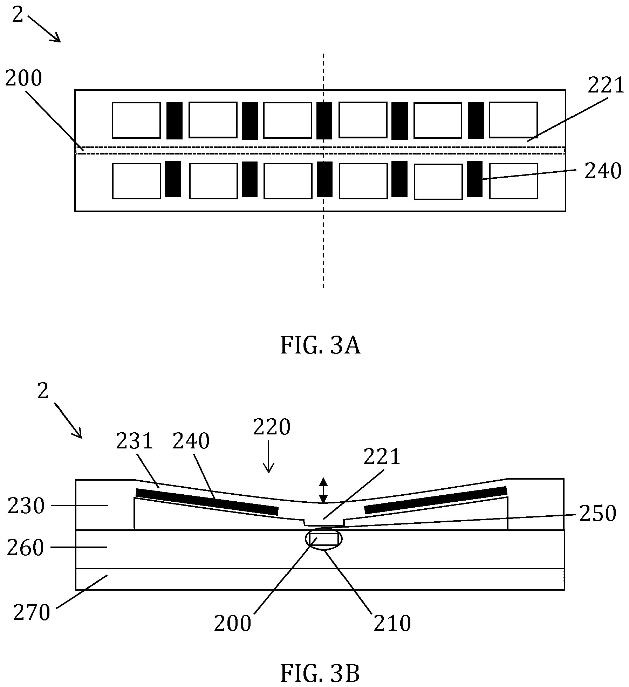

Reference is made to FIG. 3A and 3B, which are, respectively, a top view and a cross-sectional view (along the dashed line in FIG. 3A), of a photonic integrated circuit (2) in accordance with embodiments of the present invention. The photonic integrated circuit (2), designed for visible-light applications comprises a silicon nitride waveguide (200), embedded in a silicon oxide substrate (260) on a silicon substrate (270). The waveguide (200) is for guiding an electro-magnetic wave (210). The photonic integrated circuit (2) further comprises a thermomechanical compensator comprising a thermomechanical actuator (220). The thermomechanical actuator (220) comprises a double-clamped beam or doubly clamped bimorph cantilever with a silicon dioxide body (230) comprising a silicon dioxide layer (231) in the cantilever and an aluminium layer (240), embedded in the cantilever below the center of the cantilever. More specifically, as may be observed in the top view of FIG. 3A, the thermomechanical actuator (220) comprises, in the example illustrated, a plurality of said bimorph cantilevers, holding, above the waveguide (200), an elongated beam (221) along a large part of the embedded waveguide (200), for interacting with the electromagnetic wave (210) in the waveguide (200).

The doubly clamped cantilever (220) is suspended over the silicon nitride waveguide (200), forming a gap (250) between, on one hand, the elongated beam (221) of the thermomechanical actuator (220), and, on another hand, the waveguide (200). As the ambient temperature changes, the bimorph cantilever (220) bends upward or downward (indicated by the two-sided arrow) due to the higher thermal expansion coefficient of aluminium (240) compared to silicon dioxide (231), thus changing the size of the gap (250) and affecting the effective refractive index experienced by the electromagnetic wave (210) in the silicon nitride waveguide (200). This compensates for the thermally induced phase shift in the silicon nitride waveguide (200) and/or elsewhere in the photonic integrated circuit (2), reducing or minimizing the aggregate phase shift within at least part of the photonic integrated circuit (2).

### Example 3: Thermomechanical compensator comprising a membrane in an optical ring resonator

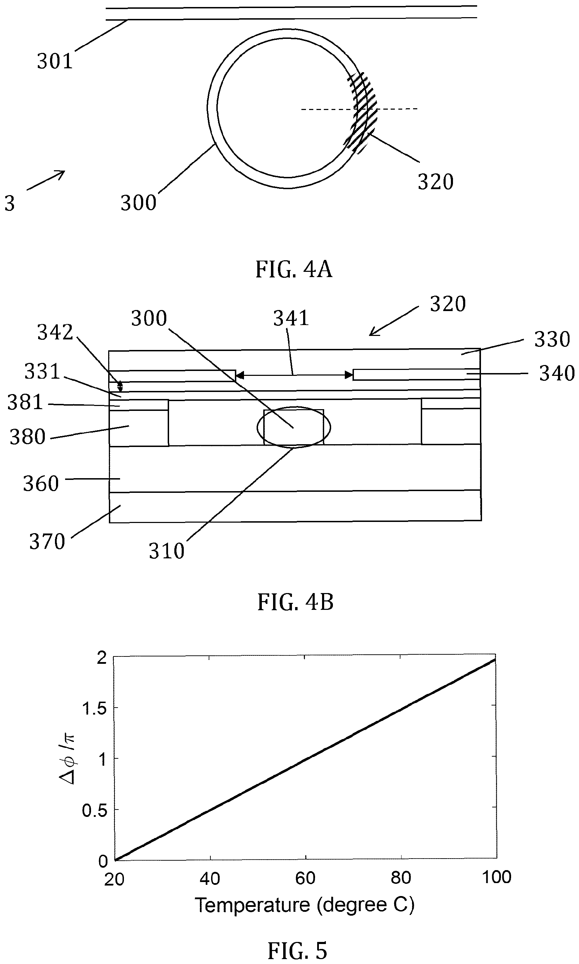

Reference is made to FIG. 4A and 4B, which are, respectively, a top view and a cross-sectional view (along the dashed line in FIG. 4A), of a photonic integrated circuit (3) in accordance with embodiments of the present invention. In the present invention, the photonic integrated circuit (3) comprises a ring resonator (300) and a coupled waveguide (301) for coupling an electro-magnetic wave (310) into and/or out of the ring resonator (300). The ring resonator (300) is a waveguide (300) forming a closed loop. The ring resonator (300) is, in the example illustrated, positioned on a silicon oxide substrate (360), in turn positioned on a silicon substrate (370).

The refractive index of the silicon of which the ring resonator (300) is formed is dependent on temperature, i.e., on the ambient temperature: silicon has a large thermo-optic coefficient of 1.5×10⁻⁴ 1/K. The changing refractive index of the ring resonator (300) with changing temperature results in a phase shift for an electro-magnetic wave propagating in the ring resonator (300), as shown in FIG. 5 that is a plot of the phase shift as a function of temperature with respect to the phase at 20°C. Whereas the ring resonator (300) may be adapted for containing an electro-magnetic wave (310) having a particular frequency at an ambient temperature of 20°C, the phase shift present at other temperatures compared to when the ambient temperature is 20°C may make the ring resonator (300) unsuitable for that particular frequency at those other temperatures.

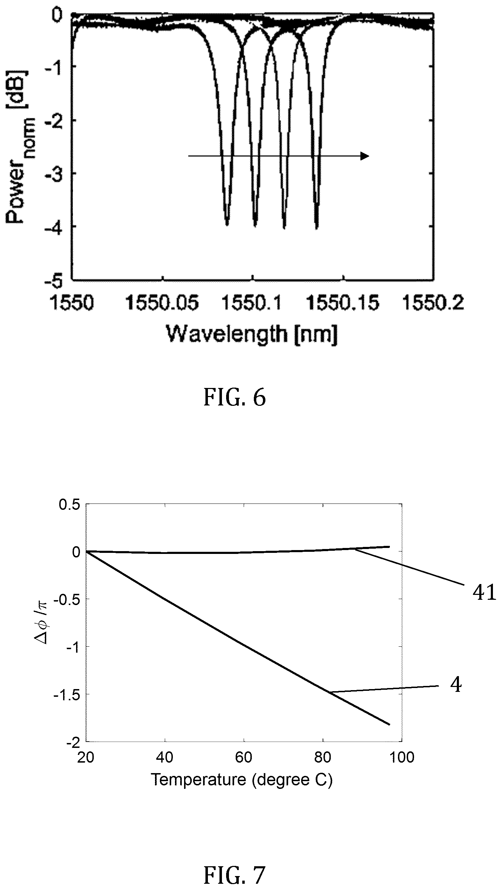

FIG. 6 is a plot of the power transmission spectrum for an electro-magnetic wave having a particular frequency through the ring resonator (300) for different ambient temperatures, with the peak power shifting to longer wavelengths with increasing temperature, increasing from 291.5K to 294.5K, showing the highly temperature sensitive performance of the ring resonator (300). Concretely, FIG. 6 shows, for an input into the left-hand-side of the straight waveguide (301) of FIG. 4A, an output at the righthand-side of the straight waveguide (301) of FIG. 4A, as a function of wavelength. Due to the sharpness of the peaks, it may be observed that, when the ring resonator is adapted for a particular frequency at a particular temperature, even a temperature increase of a single degree Kelvin may make the ring resonator (300) completely unsuitable for said particular frequency, in absence of a compensator.

Indeed, to ensure a stable performance (for a silicon ring modulator with Q=5000), the phase error is preferably kept below 0.008 π. This corresponds to a temperature change that may be at most 0.1K when no phase compensation in accordance with embodiments of the present invention is provided.

In the example illustrated, the compensator in embodiments of the present invention is indicated by the dashed area in FIG. 4A and shown in more detail in FIG. 4B. The compensator comprises a thermomechanical actuator (320) comprising a membrane suspended over part of the ring resonator (300). Said thermomechanical actuator (320) comprises a silicon oxide layer (330) over a silicon layer (331). Said thermomechanical actuator (320) further comprises two aluminium layers or beams (340) embedded in the silicon oxide layer (330), on opposite sides of the waveguide (300), separated from each other by a gap (341) that is, in the example illustrated, 2µm. The membrane or the thermomechanical actuator (320) rests on two ridges, each comprising a silicon layer (380) and a silicon oxide layer (381), the two ridges being located at opposite sides of the waveguide (300). In the example illustrated, the distance or height (342) from the top of the ridge, i.e., the top of the silicon layer (331), to the aluminium layer (340) is 100nm. The actuator (320) has a width, between the two ridges, of 35µm, and a length, along the waveguide (300), of 48µm. On change of the ambient temperature, the membrane or actuator (320) bends, thereby changing the gap between the waveguide (300) and the actuator (320).

Reference is made to FIG. 7, which shows the effect of the thermomechanical compensator shown in FIG. 4A and 4B on the phase shift, indicated by (4), as a function of temperature with respect to the phase at 20°C. It may be observed that the phase shift induced by the thermomechanical compensator has an opposite sign, and has substantially the same magnitude, with respect to the phase shift (4) resulting from the temperature dependent refractive index of the waveguide (300) shown in FIG. 5. The aggregate phase shift (which is, in this example, the sum of the phase shift resulting from the temperature dependent refractive index of the waveguide (300) and the phase shift induced by the thermomechanical compensator) is indicated by (41), and is substantially zero over the whole shown temperature range, and is, in the example illustrated, < 0.01 π over the temperature range of from 20 to 80 °C, indicating the temperature-insensitivity that can be achieved in embodiments of the present invention.

It is possible to design a thermomechanical compensator suitable for a larger temperature range, i.e., being insensitive to temperature over a larger temperature range. Typically, a smaller displacement corresponds to a more linear response, but to sufficiently induce a phase shift with the thermomechanical compensator, longer actuator sections for interacting with the electro-magnetic wave in the waveguide are required. The effect is still applicable to low temperatures, although it becomes increasingly non-linear at lower temperatures before touching the waveguide.

Thus, it is shown that the ring resonator of the example illustrated, with the thermomechanical compensator, is substantially temperature insensitive over the whole (ambient) temperature range of from 20 to 80 °C. Therefore, the thermomechanical compensator suffices for providing a temperature-independent functionality with respect to phase shifts, so that no active compensators may be required.

Although a specific design and dimensions are mentioned above for components of the compensator of the example illustrated, these are optimized for a wavelength of the electro-magnetic wave of 1550 nm, the specific length of the ring resonator (having a radius of 20 µm) and the materials of the different components. If a part of a photonic integrated circuit for which a temperature dependent phase shift should be compensated using a compensator in accordance with embodiments of the present invention, has a different configuration, the dimensions of the thermomechanical actuator will have to be optimized for that specific different configuration, as will be clear to the person skilled in the art.

For example, a similar membrane-type thermomechanical compensator was designe.d by the inventors for a ring resonator formed of a silicon nitride waveguide. Silicon nitride-based photonic integrated circuits are temperature sensitive as well, since the thermo-optic coefficient of silicon nitride is about one order of magnitude smaller than that of silicon, so that silicon nitride-based photonic integrated circuits are typically less temperature sensitive. In that case, for the optimized design, compared to the example of the silicon ring resonator above: the length of the thermomechanical actuator (320) is shorter; the gap separating the two aluminium beams (340) is larger (8 µm); and the width of the membrane is smaller (15 µm). Generally, for the silicon nitride ring resonator, the thermomechanical compensator is more compact, as typically less displacement is required.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A photonic integrated circuit (1, 2, 3) comprising:
a waveguide (100, 200, 300) for guiding an electro-magnetic wave (110, 210, 310), and
a thermomechanical compensator comprising a thermomechanical actuator (120, 220, 320) for interacting with the electro-magnetic wave (110, 210, 310), when present in the waveguide (100, 200, 300), for affecting an effective refractive index experienced by said electro-magnetic wave (110, 210, 310),
arranged so that a position of the actuator (120, 220, 320) with respect to said waveguide (100, 200, 300) depends on an ambient temperature so as to reduce orminimize an aggregate phase shift of said electro-magnetic wave (110, 210, 310) within at least part of the photonic integrated circuit (1, 2, 3) resulting from a change of said ambient temperature .

2. The photonic integrated circuit (1, 2, 3) of claim 1, wherein the thermomechanical actuator (120, 220, 320) comprises a thermally activated bimorph or multimorph comprising at least two layers (130, 140; 231, 240; 330, 331, 340) formed of different materials having different thermal expansion coefficients.

3. The photonic integrated circuit (1, 2, 3) of claim 2, wherein a first of the two layers (130, 331) is formed of silicon and a second of the two layers is formed of aluminium (140, 340).

4. The photonic integrated circuit (1, 2, 3) of any of the previous claims, wherein the actuator (120, 220, 320) comprises a suspended structure, wherein the suspended structure is adapted for moving, by a temperature change, with respect to said waveguide (100, 200, 300).

5. The photonic integrated circuit (1, 2, 3) of claim 4, wherein the suspended structure comprises a singly clamped cantilever (120).

6. The photonic integrated circuit (1, 2, 3) of claim 4, wherein the suspended structure comprises a membrane (320) suspended over the waveguide (300).

7. The photonic integrated circuit (1, 2, 3) of claim 4, wherein the suspended structure comprises a double-clamped beam (220).

8. The photonic integrated circuit (1, 2, 3) of any of the previous claims, wherein the dependence of said position of the actuator (120, 220, 320) with respect to said waveguide (100, 200, 300) on said ambient temperature means that a size of a gap separating the thermomechanical actuator (120, 220, 320) from the waveguide (100, 200, 300) depends on said ambient temperature.

9. The photonic integrated circuit (1, 2, 3) of any of the previous claims, wherein the waveguide (100, 200, 300) comprises a ring resonator, or a Mach-Zehnder interferometer, or a photonic crystal, or a phase shifter, or an amplitude modulator, or a filter, or an arrayed waveguide grating.

10. The photonic integrated circuit (1, 2, 3) of any of the previous claims, wherein the waveguide (100, 200, 300) is formed of silicon, silicon nitride, or indium phosphide.

11. A method of reducing or minimizing an aggregate phase shift of an electromagnetic wave (110, 210, 310) within at least part of a photonic integrated circuit (1, 2, 3) resulting from a change of an ambient temperature, comprising:
providing the electro-magnetic wave (110, 210, 310) in a waveguide (100, 200, 300) of the photonic integrated circuit (1, 2, 3), and
providing a thermomechanical compensator comprising a thermomechanical actuator (120, 220, 320) for interacting with the electro-magnetic wave (110, 210, 310) for affecting an effective refractive index experienced by said electromagnetic wave (110, 210, 310), wherein the actuator (120, 220, 320) is actuated by said ambient temperature change so that a position of the actuator (120, 220, 320) with respect to said waveguide (100, 200, 300) changes so as to reduce or minimize said aggregate phase shift.
